# EUROPEAN PATENT SPECIFICATION

(11) **EP 1 200 360 B1**
(45) Date of publication and mention of the grant of the patent: **22.12.2004**
(21) Application number: 00912768.9
(22) Date of filing: 30.03.2000
(51) Int. Cl.: C02F 3/02

(54) **WASTE WATER NITRIFICATION**
NITRIFIKATION VON ABWASSER
NITRIFICATION D'EAUX USEES

(30) Priority: 30.03.1999 GB 9907210
(43) Date of publication of application: 02.05.2002
(73) Proprietor: Cranfield University, Cranfield, Bedfordshire MK43 0AL (GB)
(72) Inventor: STEPHENSON, Thomas, Cranfield, Bedfordshire MK43 0BD (GB)
(74) Representative: Burrows, Anthony Gregory
(86) International application number: PCT/GB2000/001094
(87) International publication number: WO 2000/058227

(56) References cited:
- DE-A- 3 724 027
- DE-C- 3 818 777
- Y. OKAYASU ET AL. : "EMISSION OF NITROUS OXIDE FROM HIGH-RATE NITRIFICATION BY MIXED LIQUOR CIRCULATING PROCESS AND SEQUENCING BATCH REACTOR PROCESS" WATER SCIENCE AND TECHNOLOGY., vol. 36, no. 12, 1997, pages 39-45, XP000925701 ELMSFORD, NY., US ISSN: 0273-1223

## Description

This invention relates to a waste water nitrification method, and concerns in particular the control of such a method.

Investigations into nitrous oxide emissions from sewage treatment plants and lakes are reported in the article "Nitrous Oxide Emissions from Sewage Treatment Plants and Lakes" by Martin Mengis and Reto von Schulthess, EAWAG News 40D, November 1995, whilst investigations into nitrous oxide emissions from sewage treatment plants are reported in the article "Emission of Nitrous Oxide from High-rate Nitrification and Denitrification by Mixed Liquor Circulating Process and Sequencing Batch Reactor Process" by Yuji Okayasu, Isaya Abe and Yoshitaka. Matsuo, Water Science and Technology No. 12, pages 39 to 45, 1997.

Industrial and domestic waste water is treated to remove environmental pollutants. Organic matter, ammoniacal-nitrogen and other chemicals must be removed from waste water. The removal of ammoniacal-nitrogen from municipal and industrial wastewater prior to discharge is a legal requirement. Nitrification is the biological oxidation of ammonia (NH₃) to nitrate (NO₃⁻) via nitrite (NO₂⁻). Two bacteria genera are responsible for nitrification; *Nitrosomonas* oxidises ammonia to nitrite and *Nitrobacter*, oxidises this to nitrate. *Nitrosomonas* oxidise ammonia to nitrite as follows:-

| Oxidation of ammonia to nitrite | |
|---|---|
| Step | Reaction |
| 1 | NH₃ + O₂ +2H⁺ + 2e⁻ → NH₂OH + H₂O |
| | Ammonia mono-oxygenase |
| 2 | NH₂OH + H₂O → HONO + 4H⁺ + 4e⁻ |
| | Hydroxyl amine oxidoreductase |
| 3 | 0.5O₂ + 2H⁺ + 2e⁻→ H₂O |
| Total | NH₃ + 1. 5O₂ → NO₂⁻ + H⁺ + H₂O |

The Nitrobacter oxidise nitrite to nitrate as follows:-

| oxidation of nitrite to nitrate | |
|---|---|
| Step | Reaction |
| 1 | HONO + H₂O → HONO₂ + 2H⁺ + 2e⁻ |
| | Nitrite oxidoreductase |
| 2 | 0.5O₂ + 2H⁺ + 2e⁻ → H₂O |
| Total | HONO + 0.5O₂ → HONO₂ |

Nitrification is a sensitive process, the stability of which is dependent upon numerous operating conditions; especially pH, organic matter, ammonia content, dissolved oxygen and the absence of toxins. The oxidation of a kg of ammonia to nitrate requires approximately 4.3 kg of oxygen. The nitrification process has a much greater oxygen requirement than the oxidation of organic matter in waste water, with the stability of the former process particularly effected by the oxygen supply rate and dissolved oxygen (DO) concentration. Thus, any variation in the influent waste water characteristics or operating conditions that reduces the DO concentration such that the process becomes anoxic(anaerobic) may have a detrimental effect upon nitrification rate and efficiency and if left unresolved process failure could occur. To prevent such an outcome continuous online monitoring is necessary. Continuous measurement of DO during nitrification is often employed although the usefulness of such monitoring is limited. Low DO concentrations can be observed when oxygen supply rates are high enough to satisfy demand and low DO concentrations alone do not imply imminent process failure.

Monitoring of the nitrification during wastewater treatment is mainly done by spot analysis of effluent ammonia, nitrite and nitrate by wet chemistry methods. This method of monitoring is time consuming, resource demanding and does not provide any pre-warning of a nitrification failure. More recently, biological nitrification toxicity monitors have been installed in side streams at some wastewater treatment plants. Though expensive to install, time consuming and costly to operate this method at least provides online monitoring.

It has been shown that bacteria normally associated with the nitrification process produce nitrogen oxide (NO) and dinitrogen oxide (N₂O) under oxic conditions. It has been shown that NO and N₂O are formed via the reduction of NO₂⁻ when the nitrification process is oxygen stressed and operating under oxic conditions. Under such conditions NO₂⁻ is used by ammonium oxidisers as the terminal electron acceptor instead of oxygen and N₂O formed rather than NO₃⁻. Therefore, any change in influent or operating procedures that results in oxic conditions and an increase in NO₂⁻ can be determined by monitoring gaseous N₂O.

| Reduction of nitrite to dinitrogen oxide | |
|---|---|
| Step | Reaction |
| 1 | NO₂⁻ + e⁻ +2H⁺ → NO + H₂O |
| 2 | NO + e⁻ + H⁺→ ½N₂O + ½ H₂O |
| Total | NO₂⁻ + 2e⁻ + 3H⁺→ ½ N₂O + 1½ H₂O |

N₂O production during nitrification is strongly linked to nitrification inhibition. The invention exploits this relationship; gaseous N₂O concentration is determined using a N₂O gas analyser and used to assess the stability of the nitrification process. The concentration of gaseous N₂O formed during nitrification is directly related to the build-up of NO₂⁻ in the aqueous phase during oxic conditions. The failure of the nitrification caused by the presence of toxic substances is also detected by the increased N₂O production. Furthermore, the rate at which gaseous N₂O increases is directly related to the degree of. nitrification inhibition. The advantages of this invention are considerable; non-invasive online monitoring of the nitrification process in all types of biological treatment processes can be undertaken without the need for regular spot samples, wet chemistry analysis or expensive toxicity monitors.

According to the invention, there is provided a method comprising nitrification and measuring N₂O produced.

The increase in N₂O indicates that the nitrification is failing, whatever the cause of the inhibition of the nitrification. An increase in ammonia concentration, a decrease in oxygen supply (however caused) and the presence of a toxin affecting the nitrifying bacteria will each result in an increase in N₂O production.

Upon detection of nitrification failure by N₂O detection in a commercial installation a number of different actions can be taken to ensure correction of the failure. The rate of air flow into the aeration basin can be increased to raise the DO level. The influent rate could be reduced or stopped altogether. The rate of return of the activated sludge could be increased. Further material could be added to the aeration basin or the effluent to counter the presence of any toxic compound. The effluent could be passed to a further treatment stage or it could be passed to a storage tank for returning to the nitrification works as influent. Any or all of these actions can be taken in real time, in order to correct the inhibition of the nitrification.

In order that the invention may be clearly understood, and readily carried into effect, reference will now be made, by way of Example, to the accompanying drawings, in which:-
Figure 1 is a schematic representation of a fluid treatment plant,
Figure 2 is a schematic representation of a hood for collecting gases formed during fluid treatment,
Figure 3 is a graph showing the build up of NO₂⁻ in the aqueous phase and the resultant gaseous N₂O formed during nitrification when shock loaded with ammoniacal-nitrogen,
Figure 4 is a graph showing the rate of gaseous N₂O formed during nitrification for different shock loads of ammoniacal-nitrogen,
Figure 5 is a graph showing the increase of aqueous phase NO₂⁻ and gaseous N₂O during nitrification when there is aeration failure,
Figures 6a and 6b are graphs showing the effect on the nitrification process of a second Example of shock loading,
Figures 7a and 7b are graphs showing the effect on the nitrification process of a third Example of shock loading,
Figures 8a and 8b are graphs showing the effect of a second Example of a reduction in oxygen on the nitrification process,
Figures 9a and 9b are graphs showing the effect on the nitrification process of a third Example of a reduction in oxygen, and
Figures 10a and 10b are graphs showing the effect on the nitrification process of an addition of a toxic substance.

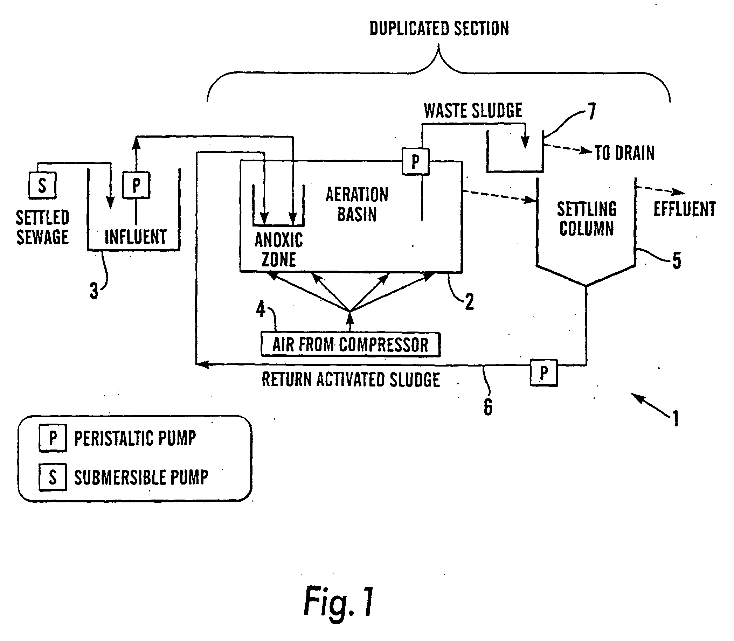

The fluid treatment plant 1 of Figure 1 is for the biological treatment of domestic or industrial waste water. The nitrification takes place in the aeration basin 2. If the waste water contains organic matter that also requires biological treatment using micro-organisms different from those carrying out the nitrification then this can also be carried out in the same basin 2. Alternatively the treatment of the organic matter and the nitrification can occur in series, in separate basins.

The waste water in the form of settled sewage arrives at a tank 3. From this tank 3 influent can be pumped at a controlled rate into the aeration basin 2 which contains the two different nitrifying bacteria, *Ni trosomonas* and *Nitrobacter.* Air from a compressor 4 is fed to the basin 2 to provide oxygen. The bacteria break down the ammoniacal-nitrogen present to nitrate via nitrate and the treated sewage in the form of sludge is principally passed to a settling column 5 whereby the sludge which contains substantial amounts of bacteria (and therefore called "activated sludge") is separated from the remainder which is discharged as effluent. The activated sludge is pumped through a return pipe 6 to the aeration basin 2. The basin 2 also has the facility to divert waste sludge to a tank 7 for passing directly to a drain.

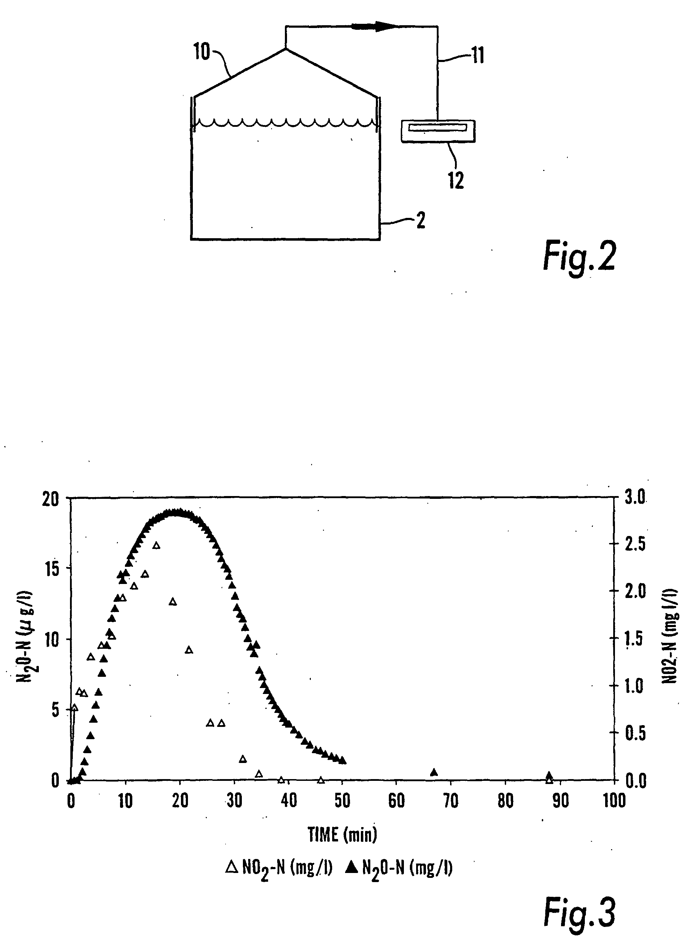

As,shown in Figure 2, a hood 10 placed above the aeration basin 2 of the nitrification wastewater treatment unit 1 collects the gaseous products formed. The gas produced is then transferred via a pipe 11 to an N₂O analyser 12 for gaseous N₂O concentration determination. A suitable analyser would be the Horiba VIA-510 Gas Analysis Unit. The following Examples show how the production of N₂O varies according to variation in operating conditions.

### Example 1

A nitrifying microbial population with a biomass concentration of 1 (±0.05) mg TSS (total suspended solids) l⁻¹ were cultured in a 7 litre activated sludge process maintained at a pH of 7.2 and a temperature of 25°C. The hydraulic retention time was 7 days and the solid retention time was 23 days. The process was fed ammonia as the only energy source; at a steady state the nitrogen loading was 244 (±15) mg NH₃-N g TSS⁻¹ d⁻¹. NH₃-N refers to nitrogen in the form of ammonia. At time zero the activated sludge plant was shock loaded by adding. ammonia at a concentration of 3.3 mg NH₃-N g TSS l⁻¹ (16.9 mg NH₃-N in total). Shock loading is the addition of a relatively large amount of a substance for a short time. The variations in N₂O concentration in the gaseous phase and the NO₂⁻ concentration in the aqueous phase are shown in Figure 3.

### Example 2

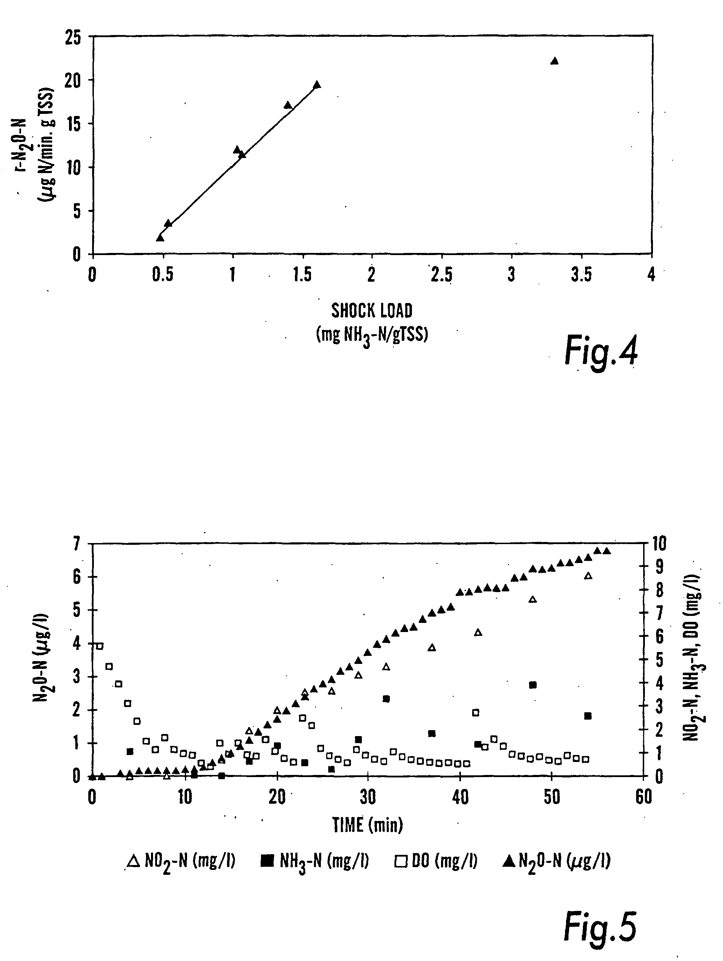

In this Example the process and operation was as detailed in. Example 1. The process was subjected to ammonia shock loads over a range of concentrations and the production rate of N₂O from the activated sludge determined (Figure 4). The rate of N₂O production was directly related to the size of the shock load at concentrations less than 1.6 NH₃-N g TSS l⁻¹. It can therefore be clearly seen from Examples 1 and 2 that a sudden. increase in the ammonia content of the influent produces an immediate and corresponding increase in N₂O formed.

### Example 3

The same process as described in Example 1 was operated under the same conditions in this Example. However, in this Example the aeration rate was reduced from 3.7 l min⁻¹ to 0.3 l min⁻¹ which resulted in a decrease in the dissolved oxygen (DO) level from 4.5 mg l⁻¹ to <2 mg l⁻¹. The resultant increase in N₂O concentration in the gaseous phase was closely related to the build-up of NO₂⁻ in the aqueous phase, as shown in Figure 5.

Other changes in influent characteristics or operating conditions also lead to an increase in gaseous N₂O formed during nitrification instability. In particular, a significant increase in the organic loading rate to a nitrification process, resulting in process instability, would also increase the formation of gaseous N₂O. Breakthrough of organic material from a prior process in a municipal treatment facility, or an increase in the feed loading rate from an industrial effluent are common causes of instability/failure in nitrification processes, and will also lead to increased N₂O production.

Further Examples are detailed below that were carried out using a pilot plant consisting of two lanes, each comprising a 300 l aeration basin 2 and a 100 l settling column 5 as shown in Figure 1. Each basin 2 was initially filled with 150 l wastewater and 150 l activated sludge taken from the return activated sludge (RAS) channel of a municipal wastewater treatment works (Cotton Valley Wastewater Treatment Works, Anglian Water). Cranfield University Wastewater Treatment Works wastewater (mean COD 391 ± 40 mg/l, mean NH, 44.3 ± 7.5 mg/l) was supplied at 50 l/h, thus maintaining the hydraulic retention time (HRT) at 8 hours. The hydraulic retention time is the length of time that the waste water remains in the aeration basin 1.

The aeration basins and settling columns were covered to minimise liquid loss by evaporation. Frost protection and insulation were provided to the aeration basins, and the settling columns insulated. The dissolved oxygen (DO) was maintained at 4.0 ± 1.7 mg/l and the influent pH remained within 7.31-7.60 without pH control. Solids were brushed off the basin walls daily, and sludge wasted from the aeration basins at a rate to maintain a mean cell retention time (MCRT) of 12 d. Measurements of the,influent and effluent chemical oxygen demand (COD), NH₃ and suspended solids (SS) concentrations were made three times per week; mixed liquor suspended solids (MLSS) was also measured.

The N₂O was sampled and analysed using an Horiba VIA-510 Gas Analysis Unit. This unit accurately measures the concentrations of specific components in gas mixtures using non-dispersive infrared analysis for spot or continuous measurement of components in sample gases. Particles consisting of different atoms absorb infrared in their specific wavelength bands, and gases at constant pressure absorb infrared corresponding to their concentration. Based on this principle, the VIA-510 measures infrared light of a specified wavelength passing through a cell of sample gas held under constant conditions. Changes to the quantity of N₂O cause changes to the quantity of light passing through the sample cell, from which gas concentrations are calculated. The gas analyser working range was 0-200 ppm, measured to one decimal place (± 1.0 ppm) when calibrated with compressed air (zero gas) and 160 ppm N₂O (with N₂ balance, certified 99.99% accurate). The limit of detection was 0.1 ppm.

The conditions under which the following Examples were carried out are summarised in the table below.

| **Experimental conditions** | | | | |
|---|---|---|---|---|
| *Example* | *Type* | *Initial MLDO* (mg.l⁻¹) | Influent *NH3* (mg.l⁻¹) | *Initial effluent* NH₃ (mg.l⁻¹) |
| 4 | NH₃ shock NH, shock | 2.2 | 36.4 | 1.7 |
| | (instantaneous) | | | |
| 5 | NH₃ shock | 2.4 | 36.0 | 1.2 |
| | (15 min duration) | | | |
| 6 | MLDO depletion | 2.4 | 44.6 | 1.2 |
| 7 | MLDO depletion | 2.9 | 40.1 | 1.9 |
| 8 | Chemical inhibition | 2.2 | 38.1 | 2.3 |

### Examples 4 and 5 - High ammonia loadings

In Example 4, one of the pilot plant lanes was shock loaded by adding 2.44g NH₃-N (dosed as 7.25g NH₃Cl dissolved in 1000ml H₂O) directly into the aeration tank, a dose calculated to exert an instantaneous oxygen demand of 3.5 mg.l⁻¹ on the 3001 aeration tank. Influent ammonia in the sewage feed was 36.4 mg.l⁻¹ prior to shock loading. The air supply was kept constant. during the experiment and the starting DO was 2.2 mg.l⁻¹. Mixed liquor DO (MLDO) and N₂O in the headspace were logged every 15 min, and the effluent was sampled for ammonia, nitrite and nitrate determination. The experiment proceeded for 12 hours.

Example 5 employed the same ammonia load, dissolved in sewage feed and pumped into the second pilot plant lane over a period of approximately 15 minutes. The experiment continued in exactly the same way as before. The starting DO was 2.4 mg.l⁻¹ and the ammonia in the sewage feed was 36.0 mg.l⁻¹. Mixed liquor DO and N₂O in the headspace were logged every 5 minutes for the first 2 hours and every 15 minutes thereafter, and the effluent was sampled for analysis at 15 minute intervals for the next 10 hours.

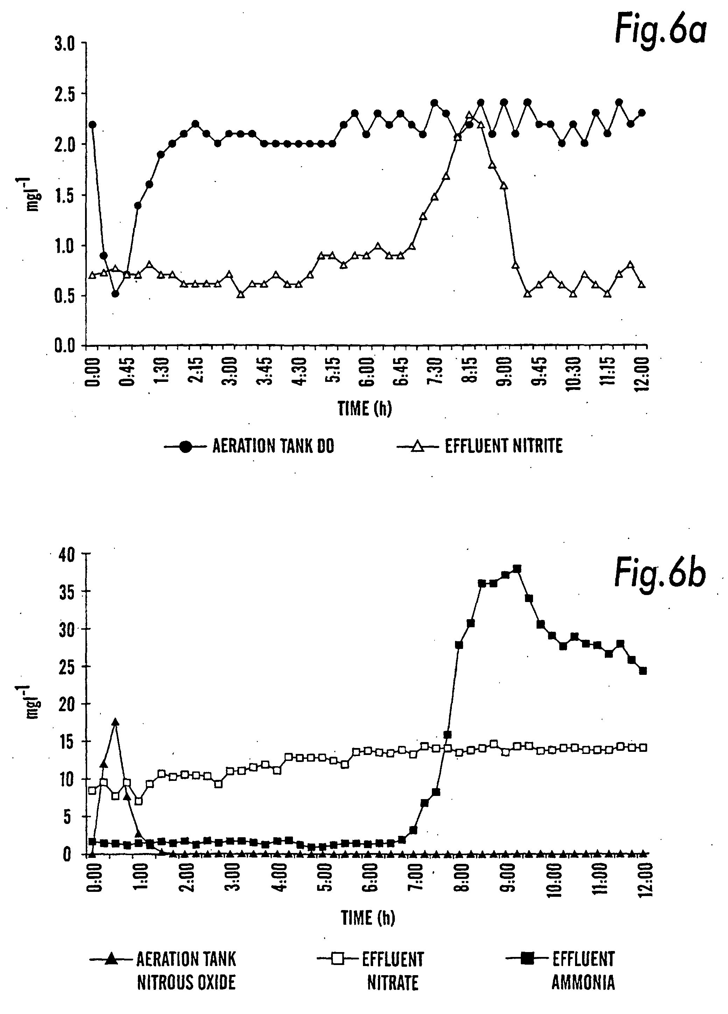

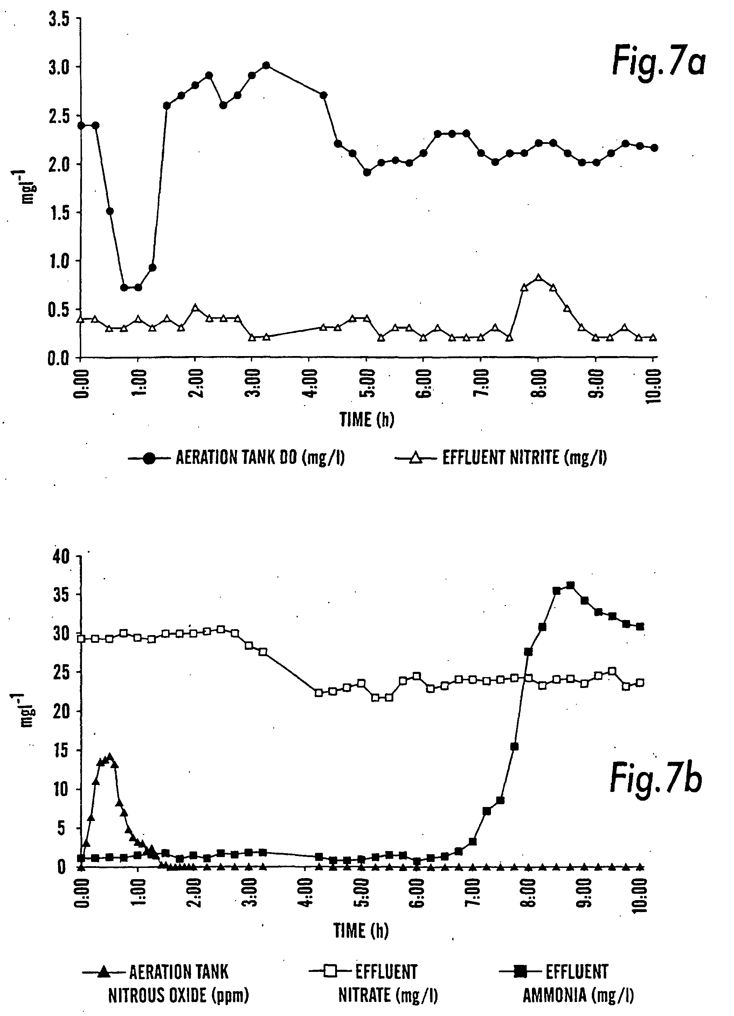

A decrease of DO in the aeration tank (Figures 6a and 7a) and an increase of N₂O in the exhaust gas from the aeration tank (Figures 6b and 7b) followed shock loading. Increases in NO₂-N (nitrogen in the form of nitrite) and NH₃-N followed after a period of time, whereas NO₃-N (nitrogen in the form of nitrate) showed no sharp increases (Figures 6b and 7b).

In Example 4, a minimum for the DO and maximum N₂O was reached approximately 30 minutes after the shock load, after which DO increased and N₂O decreased. Both DO and N₂O had recovered after approximately 105 minutes. Effluent NO₂-N (Figure 6a) and NH₃-N (Figure 6b) remained stable at 0.7 ± 0.1 and 1.5 ± 1.4 mg.l⁻¹ respectively, until 7 hours after the shock load was applied. NO₂-N had recovered after a further 2.5 hours whereas NH₃-N values remained high for the remainder of the test. An effluent sample taken 24 hours after shock loading contained 1.8 mg.l⁻¹ NH₃-N, indicating that the system had recovered. The observed peak in exhaust gas N₂O preceded the appearance of ammonia and nitrite in the plant effluent by approximately 7 hours. (i.e. 0.9 HRT). Measurement of N₂O gas gives a much earlier warning of nitrification failure when compared with other known methods.

Ammonia loading in Example 5 produced a broader peak of N₂O between 15 and 35 minutes after the dose was applied. The trough in mixed liquor dissolved oxygen (MLDO) was also broader, occurring between 30 and 75 minutes after dosing. Effluent NO₂-N (Figure 7a) and NH₃-N (Figure 7b) increased 7 hours and 30 minutes after the shock load was applied. NO₂-N had recovered after a further hour whereas NH₃-N values remained high for the remainder of the test. An effluent sample taken 15 hours after shock loading contained 2.1 mg.l⁻¹ NH₃-N, indicating that the system had recovered. The observed peak in exhaust gas N₂O preceded the appearance of ammonia and nitrite in the plant effluent by approximately 6 hours and fifteen minutes (i.e. 0.78 x HRT) .

### Examples 6 and 7 Oxygen depletion

During Examples 6 and 7, aeration was reduced to maintain DO concentrations of <1.0 mg.l⁻¹ for 1 hour. The air regulators available read from 0 to 10 bar and therefore did not give a reliable pressure reading at the low flows required, hence air flow rate measurements were not available. Air flow was altered to achieve target mixed liquor dissolved oxygen (MLDO) values rather than specified air flow rates. A submersible pump was placed in the aeration tank to maintain mixing of the mixed liquor suspended solids (MLSS) while the air supply was reduced. Headspace N₂O, MLDO and effluent NO₃,-N, NO₂-N and NH₃-N were measured as in Example 5. The initial MLDO reading was 2.4 mg.l⁻¹ and feed NH₃-N was 44.6 mg.l⁻¹ in Example 6, and 2.9 mg. l⁻¹ and 40.1 mg.l⁻¹ respectively in Example 7.

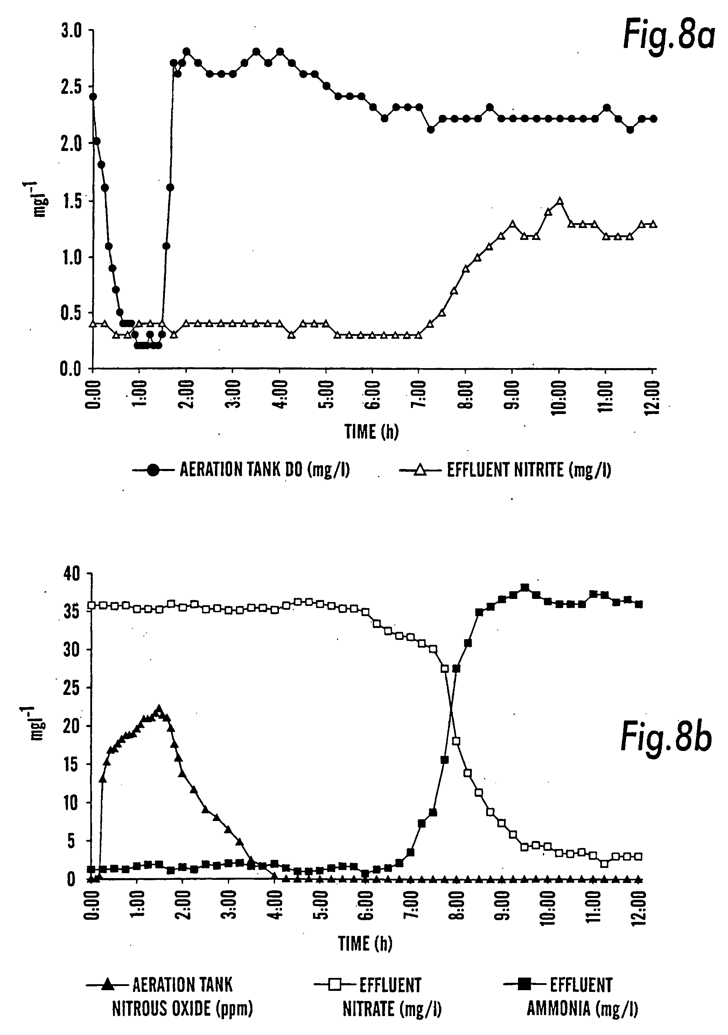

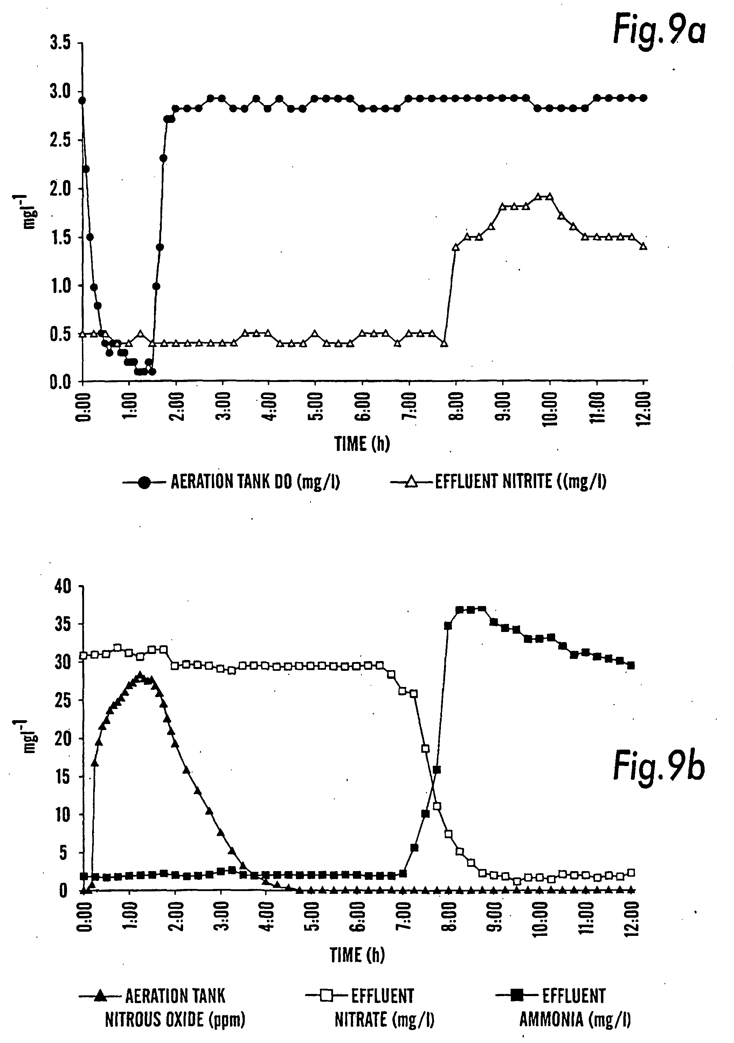

Maintaining MLDO of <1.0 mg.l⁻¹ for 1 hour led to a sharp increase in headspace N₂O occurring, peak values being observed one hour after MLDO fell to <1.0 mg.l⁻¹ (Figures 8a and 9a) and followed by a decrease to pre-test levels after a further 3 - 3.5 hours. Mixed liquor DO returned to pre-test concentrations within 15 minutes. NO₂-N and NH₃-N were produced in the effluent 7.5 hours (Figures 8a and 9a) after the N₂O in the exhaust gas began to increase. Measurement of N₂O gas again will be seen to produce the earliest warning of nitrification failure.

Minimum values for the MLDO and maximum N₂O were reached approximately 65 minutes after the air supply was reduced in both experiments, after which DO increased and N₂O decreased. Mixed liquor DO recovered approximately 20 minutes after air supply was resumed and N₂O after 2.5 hours in Example 6 and 3.25 hours in Example 7. Effluent NO₂-N (Figures 8a and 9a) and NH₃-N (Figures 8b and 9b) remained stable until 7.5 hours (0.90 HRT) after the N₂O detected began to increase. Effluent NO₂-N and NH₃-N values remained high for the remainder of the test. An effluent sample taken 12 hours after Example 6 contained 3.7 mg.l⁻¹ NH₃-N, and 8.7 mg.l⁻¹ 12 hours after Example 7, indicating that the system had not completely recovered, but this was partly attributed to ambient temperatures of 5 - 8 °C.

### Example 8 - Nitrification inhibition by toxic substance

Example 8 was a chemical shock applied to one of the activated sludge systems. A dose of allylthiourea (ATU), a known nitrification inhibitor was mixed with sewage and pumped in as feed over a 15 minute period. The total ATU load was 22.8 mg, a dose calculated to give 75% inhibition in the aeration basin. A concentration of 0.076 mg.l⁻¹ produces 75% inhibition. Initially the influent NH,-N concentration was 38.1, mg.l⁻¹ and MLDO was 2.2 mg.l⁻¹. The aeration rate was kept constant throughout the 12 hour test, and MLDO, headspace N₂O and effluent NO₃-N, NO₂-N and NH,-N were measured as in Examples 5 to 7.

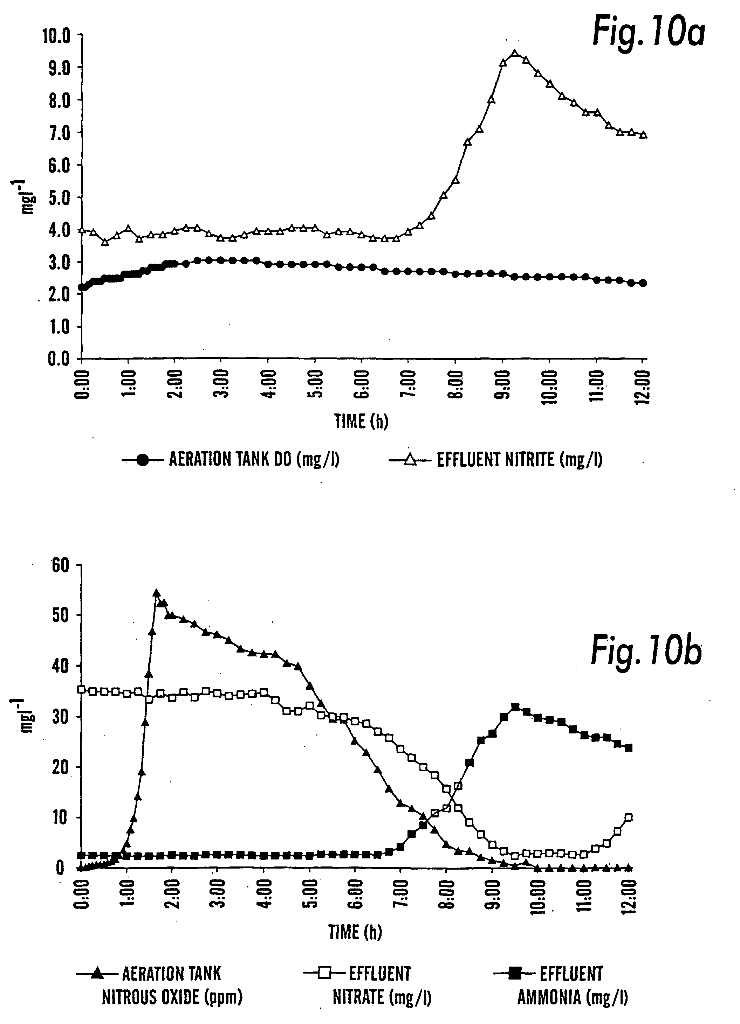

In Example 8, the MLDO and N₂O increased when the ATU dose was applied to the aeration tank. Maximum mixed liquor dissolved oxygen (MLDO) was reached approximately 180 minutes after the shock load, N₂O after approximately 135 minutes. Both DO and N₂O recovered after approximately 10 hours. Effluent NO₂-N (Figure 10a) and NH₃-N (Figure 10b) remained stable at 3.8 ± 0.1 mg.l⁻¹ and 2.5 ± 0.3 mg.l⁻¹ respectively until 7 hours after the shock load was applied. The increase in exhaust gas N₂O preceded the appearance of ammonia and nitrite in the plant effluent by approximately 6 hours (i.e. 0.75 x HRT). Toxicity can be caused by other substances including heavy metals, organic compounds with C-S and C-N linkages, phenolics and sulphides.

The results are summarised in the table below. The time lag between N₂O detection and the appearance of nitrite in the effluent ranged from 0.75 to 0.90 HRT. Mean time taken from N₂O detection to appearance of nitrite was 0.808 HRT (i.e. 6 hours 28 minutes), providing early warning of nitrification failure.

| ***Results summary.*** | | | | | | | |
|---|---|---|---|---|---|---|---|
| *Example* | *Type* | *Initial N*_{*2*}*O (ppm)* | *Peak N*_{*2*}*O (ppm)* | *Time to N*_{*2*}*O peak (HRT)* | *Time to effluent N*_{*2*}*O (HRT)* | *Time to increased effluent NH3 (HRT)* | *Time from N*_{*2*}*O increase to effluent NO*_{*2*} *(HRT)* |
| 4 | NH₃ | 0.1 | 17.5 | 0.0625 | 0.9 | 0.9 | 0.9 |
| 5 | NH₃ | 0.1 | 14.2 | 0.0313 | 0.938 | 0.938 | 0.78 |
| 6 | MLDO | 0.1 | 22.3 | 0.125 | 0.938 | 0.938 | 0.805 |
| 7 | MLDO | 0.1 | 28.1 | 0.135 | 0.938 | 0.938 | 0.805 |
| 8 | ATU | 0.1 | 54.5 | 0.155 | 0.875 | 0.875 | 0.75 |

From all of the above Examples it can be seen that N₂O detection provides early warning of nitrification failure, regardless of the cause of the failure.

The time lag between detection of increased offgas N₂O and the appearance of nitrite in the effluent ranged from 0.75 to 0.90 HRT. The mean time taken from N₂O increase to appearance of nitrite was. 0.808 HRT, providing a 6.5 hour warning of nitrification failure, indicating that N₂O detection is a superior indicator of nitrification failure.

## Claims

1. A method of monitoring for failing of nitrification of waste water in a waste water treatment plant, comprising measuring N₂O produced, the measured N₂O concentration increasing following said failing of said nitrification.

2. A method according to claim 1, wherein said failing is caused by increasing ammonia concentration in said waste water.

3. A method according to claim 1 or 2, wherein oxygen is supplied to said waste water and said failing is caused by decreasing supply of oxygen to said waste water.

4. A method according to claim 1, 2 or 3, wherein said failing is caused by a substance which is toxic to nitrifying bacteria present in said waste water.

5. A method according to any preceding claim, wherein action is taken in response to the increase in the N₂O concentration.

6. A method according to claim 5wherein said action comprises increasing rate of O₂ addition.

7. A method according to claim 5 or 7, wherein said action comprises reducing or stopping the inflow of waste water to the nitrification.

8. A method according to claim 5, 6, or 7, wherein said action comprises increasing rate of return of activated sludge.

9. A method according to any one of claims 5 to 8, wherein said action comprises diverting said waste water to a storage tank.

10. A method according to any one of claims 5 to 8, wherein said action comprises passing said waste water to a further treatment stage.

11. A method according to claim 4, or any one of claims 5 to 10 as appended to claim 4, wherein further material is added to said waste water to counter the presence of said substance.

## Patentansprüche

1. Verfahren zur Überwachung eines Versagens der Nitrifizierung von Abwasser in Abwasserreinigungsanlagen, umfassend die Messung des erzeugten N₂O, wobei die gemessene N₂O-Konzentration nach dem Versagen der Nitrifizierung steigt.

2. Verfahren nach Anspruch 1, wobei das Versagen durch eine steigende Ammoniakkonzentration im Abwasser bewirkt wird.

3. Verfahren nach Anspruch 1 oder 2, wobei Sauerstoff dem Abwasser zugeführt wird und das Versagen durch eine Abnahme der Sauerstoffzufuhr zum Abwasser bewirkt wird.

4. Verfahren nach Anspruch 1, 2 oder 3, wobei das Versagen durch eine Substanz bewirkt wird, die gegenüber im Abwasser vorhandenen nitrifizierenden Bakterien toxisch ist.

5. Verfahren nach einem der obigen Ansprüche, wobei eine Maßnahme als Reaktion auf die Erhöhung der N₂O-Konzentration ergriffen wird.

6. Verfahren nach Anspruch 5, wobei die Maßnahme die Erhöhung der Rate der O₂-Zufuhr umfasst.

7. Verfahren nach Anspruch 5 oder 6, wobei die Maßnahme die Verminderung oder das Stoppen des Zuflusses von Abwasser zur Nitrifizierung umfasst.

8. Verfahren nach Anspruch 5, 6 oder 7, wobei die Maßnahme die Erhöhung der Rückführungsrate von Belebtschlamm umfasst.

9. Verfahren nach einem der Ansprüche 5 bis 8, wobei die Maßnahme das Umleiten des Abwassers zu einem Vorratsbehälter umfasst.

10. Verfahren nach einem der Ansprüche 5 bis 8, wobei die Maßnahme das Leiten des Abwassers zu einer weiteren Behandlungsstufe umfasst.

11. Verfahren nach Anspruch 4 oder einem der Ansprüche 5 bis 10, soweit sie sich auf Anspruch 4 beziehen, wobei weiteres Material zum Abwasser gegeben wird, um dem Vorhandensein der Substanz entgegenzuwirken.

## Revendications

1. Un procédé de contrôle d'un défaut de nitrification d'eaux usées dans une installation de traitement d'eaux usées, comprenant une mesure de N₂O produit, la concentration du N₂O mesuré augmentant suivant ledit défaut de nitrification.

2. Un procédé selon la revendication 1, dans lequel ledit défaut est provoqué par une augmentation de la concentration d'ammoniaque dans lesdites eaux usées.

3. Un procédé selon la revendication 1 ou 2, dans lequel de l'oxygène est amené auxdites eaux usées et où ledit défaut est provoqué par une diminution de l'amenée d'oxygène dans lesdites eaux usées.

4. Un procédé selon la revendication 1, 2 ou 3, dans lequel ledit défaut est provoqué par une substance qui est toxique aux bactéries de nitrification présentes dans lesdites eaux usées.

5. Un procédé selon une quelconque revendication précédente, dans lequel une action est prise en réponse à l'augmentation dans la concentration de N₂O.

6. Un procédé selon la revendication 5, dans lequel ladite action comprend l'augmentation du taux d'addition de O₂.

7. Un procédé selon la revendication 5 ou 7, dans lequel ladite action comprend la réduction ou l'arrêt de l'amenée d'eaux usées vers la nitrification.

8. Un procédé selon la revendication 5, 6 ou 7, dans lequel ladite action comprend l'augmentation du taux de retour des boues activées.

9. Un procédé selon l'une quelconque des revendications 5 à 8, dans lequel ladite action comprend la dérivation desdites eaux usées vers un réservoir de stockage.

10. Un procédé selon l'une quelconque des revendications 5 à 8, dans lequel ladite action comprend le passage desdites eaux usées à un stade de traitement ultérieur.

11. Un procédé selon la revendication 4, ou l'une quelconque des revendications 5 à 10 dans leur dépendance de la revendication 4, dans lequel une matière supplémentaire est ajoutée auxdites eaux usées pour contrer la présence de ladite substance.
